# EUROPÄISCHE PATENTSCHRIFT

(11) **EP 2 692 589 B1**
(45) Veröffentlichungstag und Bekanntmachung des Hinweises auf die Patenterteilung: **12.10.2016**
(21) Anmeldenummer: 13178583.4
(22) Anmeldetag: 30.07.2013
(51) Int. Cl.: B60R 19/40

(54) **Stoßfängeranordnung mit verminderten Bauraum**
Bumper assembly with reduced physical volume
Agencement de pare-chocs avec espace de construction réduit

(30) Priorität: 01.08.2012 DE 102012107042
(43) Veröffentlichungstag der Anmeldung: 05.02.2014
(73) Patentinhaber: Benteler Automobiltechnik GmbH, 33102 Paderborn (DE)
(72) Erfinder: Handing, Christian, 33449 Langenberg (DE); Fechtelpeter, Dipl.-Ing. Christian, 33098 Paderborn (DE)
(74) Vertreter: Ksoll, Peter

(56) Entgegenhaltungen:
- DE-A1- 19 652 425
- DE-A1- 19 905 784
- DE-A1-102010 017 885
- DE-U1- 29 704 882

## Beschreibung

Die vorliegende Erfindung betrifft eine Stoßfängeranordnung für ein Kraftfahrzeug umfassend einen Hauptquerträger und wenigstens zwei Deformationselemente zur Anbindung des Hauptquerträgers an die Fahrzeugkarosse mit den Merkmalen des Oberbegriffs von Patentanspruch 1.

Bei heutigen Kraftfahrzeugen, insbesondere bei Personenkraftfahrzeugen, werden hohe Anforderungen an das Design sowie damit verbundene Aerodynamikbeiwerte, die sich maßgeblich auf den Kraftstoffverbrauch niederschlagen, gestellt. Hierzu werden an Kraftfahrzeugen Frontschürzen sowie Heckschürzen montiert, die zum einen maßgeblich zu der Erscheinungsform des Kraftfahrzeugs beitragen, zum anderen aber auch die Aerodynamikbeiwerte beeinflussen. Hierzu gibt es zahlreiche Ansätze aus dem Stand der Technik, wobei in einfachster Weise hinter der Frontschürze ein elastisches Material positioniert wird, so dass hier eine Nachgiebigkeit im Falle eines Anpralls erreicht wird.

Diese Nachgiebigkeit steht jedoch im Widerspruch zu den einzuhaltenden Crashstandards bei einem Aufprall hoher Intensität, beispielsweise bei einem Zusammenstoß mit einem anderen Kraftfahrzeug oder aber einem feststehenden Gegenstand. Hier gilt es, möglichst viel Crashenergie derart zu absorbieren, dass die Auswirkungen für die Kraftfahrzeuginsassen auf ein unterkritisches Niveau gesenkt werden. In einem Kraftfahrzeug angeordnete Energieabsorptionselemente, beispielsweise Crashboxen, wandeln dabei die durch einen Aufprall auftretende kinetische Energie in Umformarbeit um und bauen dadurch die Crashenergie ab.

Die DE 101 59 865 A1 offenbart eine Stoßfängeranordnung für ein Kraftfahrzeug, wobei wenigstens ein Stoßfängerquerträger in Fahrrichtung verlagerbar angeordnet ist und zudem die Motorhaube anhebbar ist. Die Anordnung dient in erster Linie dem Fußgängerschutz und bedarf für einen Fahrzeugaufprall mit hoher Geschwindigkeit zusätzlicher Schutzvorkehrungen. Zugleich werden durch die lose Lagerung des Hauptquerträgers die Enden der Längsträger und damit der Frontbereich der Fahrzeugkarosse anfällig gegen Verwindung.

Die DE 196 52 425 A1 befasst sich mit einem Stoßfängersystem, welches aus einem Hauptquerträger, zwei Dämpfungszylindern sowie einem Hilfsquerträger besteht und ein gemeinsames Montagemodul zur Befestigung an den Fahrzeuglängsträgern bildet. Der Hauptquerträger ist dabei mit den Dämpfungszylindern derart verbunden, dass im Falle eines bevorstehenden Crashs die durch die Notbremsung eingeleitete Energie zur Aktivierung der Dämpfungszylinder verwendet wird, wobei die Dämpfungszylinder den Hauptquerträger nach vorn bewegen. Bei dem Hauptquerträger handelt es sich um eine Stoßstange, wobei nach Ausfahren der Dämpfungszylinderkolben bzw. der Stoßstange die Zylinder durch den Aufprall ein Druckmedium unter Energieabsorption verdrängen bzw. darin verdrängt wird. Dazu sind Überdruckventile in Wirkverbindung mit dem Dämpfungszylindern vorgesehen. Der Hilfsquerträger erstreckt sich zwischen den Dämpfungszylindern.

Die DE 199 05 784 A1 zeigt eine Aufprallschutzvorrichtung für ein Kraftfahrzeug, mit einem aus einer Ausgangsposition in eine Aktivposition verlagerbare Stoßfängerschürze, welche in dem Ausführungsbeispiel als Frontendteil oder Heckendteil bzw. im Teil des Fahrzeugs ausgebildet ist. Es wird eine direkte Kopplung des Stoßfängerquerträgers mit Deformationselementen offenbart, die ihrerseits einteilig ausgebildet und direkt in Längsträgern der Fahrzeugkarosse verlagerbar aufgenommen sind. Die Verlagerung des Frontendmoduls bzw. des Heckendteils erfolgt durch einen zentralen Aktuator in Form eines Airbags, welcher zwischen dem Stoßfängerquerträger und dem Frontendmodul bzw. Heckendmodul angeordnet ist. Mittels innerhalb der Deformationselemente angeordneter Verriegelungselemente wird das Frontendmodul in seiner Endposition festgelegt. Die DE 10 2008 060 716 A1 beschreibt eine Stoßfängeranordnung mit einem Deformationselement, welches bei Detektion eines bevorstehenden Aufpralls in eine Vorcrashlage verlagerbar und sodann arretierbar ist. Dadurch soll zusätzlicher Deformationsraum und damit eine erhöhte Energieaufnahmevermögen erreicht werden.

Die DE 297 04 882 U1 offenbart einen Fahrzeugwindabweiser der im Frontbereich ein- und ausfahrbar ist. Es kann sich hierbei auch um einen weiteren Stoßfänger handeln. Bei dem ersten feststehenden Stoßfänger können hierzu Durchdringungen für das Ausfahrsystem des weiteren Stoßfängers eingelassen sein. Das Ausfahrsystem kann aus einer Kolbenzylinderanordnung bestehen, insbesondere aus abnehmbaren Einzelzylindern, die ineinander verschiebbar gelagert sind.

Eine Stoßfängeranordnung bildet die Stoßfängeranordnung der DE 10 2010 017 885 A1. Dabei wird ein Stoßfänger mit einem nach vorn verlagerbaren Querträger offenbart, welcher an einem aus zwei teleskopartig verlagerbaren Segmenten gebildetem Deformationselement gekoppelt ist. Bei Detektion eines bevorstehenden Aufpralls soll der Deformationsweg verlängert und so das Energieaufnahmevermögen erhöht und die Unfallfolgen für den Insassen und die Fahrzeugkarosse verringert werden.

Es hat sich jedoch gezeigt, dass die verlagerbare Anordnung eines Querträgers bzw. von Deformationselementen zu einer Verringerung der Steifigkeit der Fahrzeugkarosse, insbesondere zur Herabsetzung der Verwindungssteifigkeit in der Fahrzeugfront führt, was sich in Falle eines Frontalaufpralls, insbesondere auch eines außermittigen Frontalaufpralls sehr negativ auf die Sicherheit auswirken kann, weil definierte Lastpfade durch eine starke Verwindung verlassen werden könnten. Der Erfindung liegt die Aufgabe zugrunde, eine Stoßfängeranordnung für ein Kraftfahrzeug aufzuzeigen, bei welcher ein Hauptquerträger mit einem verlagerbaren Segment jeweils eines Deformationselements verbunden ist, dahingehend zu verbessern, dass die Torsionssteifigkeit der Stoßfängeranordnung quer zur Fahrtrichtung verbessert und die Zuverlässigkeit und Funktionsfähigkeit des Stoßfängersystems im Fahrzeugbetrieb gesteigert wird.

Diese Aufgabe wird durch erfindungsgemäße Stoßfängeranordnung mit den Merkmalen des Patentanspruchs 1 gelöst.

Merkmale der Unteransprüche ergeben vorteilhafte Ausführungsformen.

Erfindungsgemäß wird eine Stoßfängeranordnung für ein Kraftfahrzeug vorgeschlagen, welche einen in Fahrtrichtung (X) verlagerbaren Hauptquerträger umfasst, welcher sich wenigstens abschnittsweise zwischen zwei Deformationselementen erstreckt, wobei die Deformationselemente jeweils ein verlagerbares Segment und ein ortsfestes Segment, welche relativ zueinander bewegbar sind, umfassen, wobei das verlagerbare Segment mit dem Hauptquerträger gekoppelt ist und das ortsfeste Segment mit der Fahrzeugkarosse direkt oder über eine Flanschplatte gekoppelt ist. Gekennzeichnet ist die Stoßfängeranordnung dadurch, dass benachbart zum Hauptquerträger ein ortsfester Hilfsquerträger angeordnet ist und sich zwischen den Deformationselementen erstreckt, wobei der Hilfsquerträger mit dem ortsfesten Segment des Deformationselementes gekoppelt ist oder über Flanschplatten an der Fahrzeugkarosse insbesondere spielfrei koppelbar ist. Dem Hilfsquerträger ist dabei ein Verriegelungselement zugeordnet, welches den Hauptquerträger direkt oder indirekt in einer Ausgangsposition hält und/oder in der Endposition festlegt.

Im Rahmen der Erfindung ist der Hauptquerträger also zum einen dadurch definiert, dass er durch die Kopplung mit dem verlagerbaren Segment des Deformationselementes selbst auch relativ zum Fahrzeug verlagert werden kann und zwar in Fahrrichtung, um einen zusätzlichen Deformationsraum beziehungsweise Deformationsweg zu schaffen für dieses verlagerbare Segment. Gleichsam ist der Hauptquerträger auch dadurch derart zu verstehen, dass dieser als Biegeträger bei einem Fahrzeugaufprall auf ein Hindernis wirkt und die Aufprallkräfte in das Fahrzeug einleitet, ohne wesentlich zu verformen, bevor nicht auch die Deformationselemente und die Längsträger sich verformen. Der Hauptquerträger ist mit anderen Worten also keine weiche, verlagerbare, expandierbare oder eindrückbare Kunststoffträgerleiste oder Schaumleiste.

Der Hilfsquerträger ist im Rahmen der Erfindung in Fahrzeugquerrichtung (Y) torsionssteif ausgeführt, so dass dynamische und statische Biegebeanspruchungen auf die vordere Fahrzeugkarosse, insbesondere auf die freien Enden der Längsträger, von einer Fahrzeugseite auf die andere weitergeleitet und/oder verteilt werden können. Die Fahrzeugstabilität wird dadurch insgesamt gesteigert, ohne dass ein zusätzlicher separater Querträger am Unterboden oder Fahrwerk vorgesehen werden muss.

Eine derartige Stoßfängeranordnung weist mehrere Vorteile auf. Zum einen ermöglicht der Einsatz eines Hilfsquerträgers, welcher an der Fahrzeugkarosse, insbesondere an den beiden Längsträgern der Fahrzeugfront spielfrei gekoppelt ist, dass die Verdrehsteifigkeit der Fahrzeugkarosse deutlich gesteigert wird. Dazu kann vorgesehen sein, dass der Hilfsquerträger mit dem ortsfest zur Fahrzeugkarosse positionierten Segment des Deformationselements fest verbunden ist, insbesondere stoffschlüssig. Zum anderen gewährleistet die Verwendung eines torsionssteifen Hilfsquerträgers, dass auch unter Belastung, insbesondere bei einem Fahrzeugfrontalaufprall, die Längsträger untereinander in kraftwirksamer Verbindung stehen und ihre Aufgabe als Hauptlastpfad vollständig erfüllen können. Insbesondere wird damit verhindert, dass die vom Fahrzeug weg weisenden Enden der Längsträger, an welchen die Deformationselemente koppelbar sind, bei nicht ausschließlicher axialer Krafteinleitung durch einen Unfall ausknicken. Stattdessen stützen sich die Längsträger gegenseitig durch die kraftwirksame Verbindung über den Hilfsquerträger.

Im Rahmen der Erfindung kann der Hilfsquerträger selbst unterschiedlich ausgebildet sein und aus verschiedenen Materialien bestehen. In einer vorteilhaften Ausführungsform besteht der Hilfsquerträger aus einer metallischen Legierung, insbesondere aus Leichtmetall, wie Aluminium der 5000 oder 6000er Gruppe nach EN 573-3, und weist einen geschlossenen oder einseitig offenen Querschnitt auf. Insbesondere bei einem geschlossenem Profilquerschnitt des Hilfsquerträgers ist eine hohe Torsionssteifigkeit erreichbar und erlaubt bei kraftschlüssigen oder stoffschlüssiger Verbindung des Hilfsquerträgers mit der Fahrzeugkarosse eine mit nicht verlagerbaren Stoßfängeranordnungen vergleichbare Steifigkeit der vorderen Fahrzeugkarosserie.

Bevorzugt ist wenigstens ein Segment des Deformationselementes zur Fahrzeugkarosse ortsfest positioniert und an einem Längsträger und/oder innerhalb eines Längsträgers der Fahrzeugkarosse festlegbar. Dabei ist wichtig, dass das ortsfeste Segment derart befestigt ist, dass bei einem Unfall die Crashenergie, welche nicht selbst vom Deformationselement abgebaut worden ist, in die Fahrzeugkarosse weiterleitbar ist. Es bieten sich dabei eine stoffschlüssige oder eine kraftschlüssige Verbindung oder aber auch eine formschlüssige Verbindung an. Auch eine Kombination genannter Verbindungen ist vorstellbar.

Bevorzugt ist das ortsfeste Segment des Deformationselementes an einem Längsträger über Flanschplatten und/oder wenigstens teilweise innerhalb eines Längsträgers der Fahrzeugkarosse festlegbar. Vorteilhaft ist eine indirekte Verbindung über Flanschplatten, welche zusammen verschraubt werden können und so eine einfache Austauschbarkeit bei einem Fahrzeugaufprall mit geringer Geschwindigkeit ermöglichen. Jeweils eine Flanschplatte kann dabei am stirnseitigen Ende des ortsfesten Segmentes sowie am Längsträger der Fahrzeugkarosse insbesondere stoffschlüssig festgelegt und diese dann untereinander kraftschlüssig fest verbunden werden.

Die Verbindung zwischen ortsfestem Segment und Fahrzeugkarosse kann aber auch direkt kraftschlüssig erfolgen, wenn das ortsfeste Segment teilweise innerhalb des Längsträgers angeordnet ist. Somit kann das ortsfest positionierte Segment gleichzeitig am Längsträger abgestützt werden. Wichtig ist dabei, dass das Deformationsverhalten des Deformationselementes unbeeinflusst bleibt, was durch eine im Wesentlichen punktförmige oder linienförmige Kontaktierung zwischen Hilfsquerträger und Deformationselement ermöglicht werden kann. Der linienförmige Kontakt ist insbesondere in Fahrzeughochachse (Z) und als stoffschlüssige Verbindung ausgeführt. Alternativ kann es aber auch vorteilhaft sein, den Hilfsquerträger flächig an den vom Fahrzeug weg weisenden Ende des ortsfesten Segments zu koppeln, wobei sich in diesem Fall neben einer Schweißverbindung auch eine Klebeverbindung und/oder eine kraftschlüssige Verbindung dazu eignet. Wichtig ist in eine Durchführung des verlagerbaren Segments des Deformationselements innerhalb des Hilfsquerträgers vorzusehen, wenn dieser am vorderen Ende des ortsfesten Segments mit diesem gekoppelt wird. Diese kann beispielsweise als einfache Ausstanzung mit oder Lochkragen ausgeführt sein.

Es ist ein Verriegelungselement vorgesehen, welches den Hauptquerträger und/oder das verlagerbare Segment des Deformationselementes in einer Ausgangsposition hält und/oder in der Endposition festlegt. Somit wird sichergestellt, dass der Hauptquerträger in der Ausgangsposition sehr kompakt mit geringem Abstand zum Hilfsquerträger verbleibt. Zum Zeitpunkt eines Aufpralls ist der Hauptquerträger in der Endposition derart festgelegt, dass dieser Kräfte aufnehmen und an das Deformationselement weiterleiten kann. Durch den so zusätzlich geschaffenen Deformationsweg erhöht sich das Energieaufnahmevermögen signifikant.

In einer vorteilhaften Weiterbildung ist dem Hilfsquerträger ein Verriegelungselement zugeordnet, welches den Hauptquerträger direkt oder indirekt in einer Ausgangsposition hält und/oder in der Endposition festlegt. Dazu kann vorgesehen werden, dass das Verriegelungselement unmittelbar am Hilfsquerträger befestigt ist und in der Ausgangsposition des Hauptquerträgers diesen festhält. Insbesondere ist die Verriegelung derart gestaltet, dass der Hauptquerträger von einer Verriegelungsstellung in eine Entriegelungsstellung mittels einer Bewegung des Verriegelungselements zur Überwindung eines Formschlusses überführbar ist. Die Bewegung ist dabei bevorzugt als Schwenkbewegung, Drehbewegung oder aber auch als lineare Bewegung ausführbar.

Auch die Festlegung des Hauptquerträgers in seiner Endposition kann mittels eines Verriegelungselements erfolgen, welches am Hilfsquerträger befestigt ist. Dabei ist es vorstellbar, dass die Verriegelung so bemessen ist, dass der Hauptquerträger nicht über die Endposition hinaus vom Fahrzeug weg bewegbar ist, und/oder dass die Bewegung des Hauptquerträgers zurück zur Ausgangsposition blockierbar ist. Insbesondere eignen sich dafür nasenförmige und druckbeaufschlagte Rastelemente in Verbindung mit korrespondierend zu den Rastelementen geformten Rastöffnungen oder Rastkerben, wobei die Rastelemente sowohl Teil des Verriegelungselements selbst oder aber auch als separate Bauteile am Hilfsquerträger festgelegt sein können.

In einer weiteren vorteilhaften Ausführungsform der Erfindung ist genau ein Aktor am und/oder im Hilfsquerträger angeordnet, welcher dafür vorgesehen ist, den Hauptquerträger von seiner Ausgangsposition in seine Endposition zu verlagert. Das hat den Vorteil, dass sowohl Gewicht als auch Teileanzahl reduziert werden können gegenüber einer Ausführungsform, welche in jedem Deformationselement einen separaten Aktor vorsieht. Dazu wird erfindungsgemäß vorgeschlagen, dass der Aktor faltbar ausgebildet ist und zur Verlagerung des Hauptquerträgers in die Endposition von einem gefalteten, stark verdichteten Zustand in einen entfalteten Zustand überführbar ist. Die Faltbarkeit selbst ist im Rahmen der Erfindung vorzugsweise in bekannter Gestaltungsform eines pyrotechnisch aufblasbaren Gassacks möglich.

Die Faltbarkeit kann jedoch auch anders, beispielsweise in Form eines Scherengitters mit gelenkig verbundenen Scherenelementen realisiert werden, wobei in dieser Ausführungsform eine Aktivierung durch zusätzliche Druck- oder Zugelemente zwischen wenigstens zwei Scherenelementen befestigt sind, die eine Entfaltung und damit Expansion des Aktors erlauben. Diese Druck- oder Zugelemente können zudem eine Begrenzung der Ausfahrbewegung des Hauptquerträgers ermöglichen.

Weiterhin vorteilhaft sind sowohl ein zentraler Aktor als auch ein zentrales Verriegelungselement am Hilfsquerträger angeordnet, wobei das zentrale Verriegelungselement den Hauptquerträger in der Ausgangsposition festlegt, und bei einem bevorstehenden Fahrzeugaufprall diesen freigibt. Somit kommt den Deformationselementen neben der Energieaufnahmefunktion und Führungsfunktion bei der Verlagerung in die Endposition nur noch die Verriegelungsfunktion in der Endposition des Hauptquerträgers zu.

Weiterhin vorteilhaft sind sowohl ein zentraler Aktor als auch ein zentrales Verriegelungselement am Hilfsquerträger angeordnet, wobei den Deformationselementen neben der Energieaufnahmefunktion lediglich eine Führungsfunktion bei der Verlagerung in die Endposition zukommt. Natürlich muss dabei sichergestellt werden, dass die beiden Segmente des Deformationselements in der ausgefahren Endposition des Hauptquerträgers gegeneinander verriegeln und Kräfte bzw. Crashenergie aufnehmen können.

In einer weiteren Ausführungsform der erfindungsgemäßen Stoßfängeranordnung ist ein Aktor innerhalb wenigstens eines Deformationselementes angeordnet, wobei der Aktor die Verlagerung der Segmente zueinander bewirkt. Aus Symmetriegründen und zur Vermeidung einer nichtlinearen Ausfahrbewegung des Hauptquerträgers sind besonders bevorzugt in zwei Deformationselementen Aktoren angeordnet, die zeitgleich bei Detektion eines bevorstehenden Aufpralls die Bewegung des Hauptquerträgers in die Endposition initiieren. In besonders einfacher Gestaltung sind die Aktoren als mechanische Energiespeicher, insbesondere als Druckfeder ausgeführt. Es ist aber auch möglich, den Aktor pyrotechnisch auszubilden mit einem bei Zündung expandierenden Treibmittel, der eine Ausstellbewegung initiiert. Ebenso sind andere Druckspeicher auf hydraulischer oder pneumatischer Basis vorstellbar, wenn sie ausreichend schnell ansteuerbar gestaltet sind, insbesondere in einer Zeit < 100 ms.

Der Aktor wirkt in Rahmen der Erfindung mit dem Verriegelungselement derart zusammen, dass bei Zustandsänderung des Verriegelungselements von einer Verriegelungsstellung in eine Entriegelungsstellung der Hauptquerträger schlagartig in die Endposition verlagerbar ist. Die Dauer der Bewegung und die Auslösezeit ab Beginn der Detektion eines Aufpralls sind dabei so bemessen, dass ausreichend Zeit bis zum eigentlichen Aufprall verbleibt. Bevorzugt erfolgt die Auslösung, Bewegung und Verriegelung in weniger als 1 Sekunde, insbesondere in weniger als 0,5 Sekunden, wobei je nach eingesetzter Mechanik und Sensorik eine Zeit von 10ms nicht unterschritten wird. Es ist in diesem Zusammenhang auch vorstellbar, dass eine Festlegung des Hauptquerträgers abhängig von der verbleibenden Zeit für die Verlagerung in unterschiedlichen Endpositionen erfolgt. Dies kann dadurch erreicht werden, dass das Verriegelungselement entsprechend mehrere Rastpositionen aufweist. Bei sehr wenig verbleibender Zeit für die Auslösung wird wenigstens eine erste Rastposition des Verriegelungselements erreicht, welche den Hauptquerträger und das verlagerbare Deformationselement festlegt. Bei mehr zur Verfügung stehender Zeit hingegen können weitere Rastpositionen nacheinander erreicht werden, welche in Fahrtrichtung betrachtet vor der ersten Rastposition liegen.

Zumindest der Hilfsquerträger ist torsionssteif ausgeführt. Das heißt im Rahmen der Erfindung, dass dieser ein hohes Maß an Verwindungssteifigkeit in seiner Längserstreckung (Fahrzeugquerachse Y) aufweist. Dadurch, und durch eine ebenso steife direkte oder indirekte Anbindung an die Fahrzeugkarosse, welche vorteilhafterweise stoffschlüssig und/oder kraftschlüssig erfolgt, wird eine erhöhte Steifigkeit der gesamten vorderen Fahrzeugkarosse sichergestellt, welche sonst durch die losen Enden der Längsträger bei einem ausfahrbaren Hauptquerträger infolge von Lagertoleranzen nur unvollständig gegeben ist.

Der Hilfsquerträger selbst kann dabei bevorzugt als geschlossenes oder offenes Hohlprofil, insbesondere aus Leichtmetall wie Aluminium ausgebildet sein. Geschlossene Profile besitzen generell eine hohe Torsionssteifigkeit auch bei sehr geringen Wandstärken. Besonders leichte und auch mit im Querschnitt verschiedenen, belastungsangepassten Wandstärken versehene Profile lassen sich durch Strangpressen herstellen. Auch der Einsatz von Rundrohren ist möglich. Die Profile können weiter umformtechnisch bearbeitet werden, im Falle von Rohren beispielsweise derart, dass auf einer ihrer Längsseiten eine nach außen in Richtung Hauptquerträger offene, konkave Kontur ausgebildet ist. Es ist aber auch möglich, den Hilfsquerträger in Form von im Querschnitt U-förmigen oder hutförmigen Profilen auszubilden, welche ebenfalls gute Torsionssteifigkeiten aufweisen und einfacher herstellbar sind.

Weiterhin ist es möglich, dass der Hilfsquerträger in seiner Längserstreckung einen unterschiedlichen Querschnittsverlauf aufweist. Insbesondere kann vorgesehen werden, dass der Hilfsquerträger partiell eine unterschiedliche Wandstärke oder Querschnittsgeometrie aufweist. Besonders bevorzugt weist der Hilfsquerträger zumindest zwischen den Deformationselementen eine Verprägung auf, welche die Torsionssteifigkeit in diesem Bereich erhöht. So ist auch mittels der Verprägung eine U-förmige oder hutförmige Gestaltung möglich, Die Verprägung selbst kann in eine längliche metallische Formplatine ausgeformt sein, wobei zeitgleich optional die Einbringung von Öffnungen für das verlagerbare Segment des Deformationselements erfolgt.

Der Hilfsquerträger ist erfindungsgemäß bevorzugt dergestalt, dass dieser den Hauptquerträger in seiner Längserstreckung wenigstens abschnittsweise umgreift. Dies erlaubt zum einen eine Bauraum sparende Anordnung des Hauptquerträgers innerhalb eines Teils des Hilfsquerträgers. Besonders bevorzugt ist dazu der Hilfsquerträger C-förmig konfiguriert mit einer vom Fahrzeug weg gewandten Öffnung. Innerhalb des durch die Öffnung und die Schenkel des C-förmigen Hilfsquerträgers gebildeten Raumes kann nun wenigstens ein Teil des Hauptquerträgers in seiner Ausgangsposition zum Liegen kommen.

Selbstverständlich ist auch die genau umgekehrte Konstellation möglich, nämlich ein Hauptquerträger, welcher den Hilfsquerträger wenigstens abschnittsweise umgreift, und dazu mit in Richtung Fahrzeug gerichteten Schenkeln ausgebildet ist. Dabei ist der Hauptquerträger vorteilhafterweise C-förmig oder hutprofilförmig konfiguriert.

Besonders bevorzugt befindet sich im Innern des Hilfsquerträgers ein Aktor, welcher dafür vorgesehen ist, in gefalteten Zustand platzsparend im Innern zu verweilen, und bei Detektion eines bevorstehenden Aufpralls zu entfalten und dabei den Hilfsquerträger in seine Endposition zu befördern. Mit dieser Anordnung wird besonders vermieden, zusätzliche Bauräume im Bereich des Fahrzeugkühlers vorsehen zu müssen, die bei andersartigen, beispielsweise linear geführten Aktoren, insbesondere Kolben-Zylinder-Systemen, typisch sind. Bei Verwendung eines im C-förmig konfigurierten Hilfsquerträger angeordneten Gassacks als Aktor ist außerdem wichtig, dass die Schenkel des Hilfsquerträgers eine Begrenzung und damit in Kombination mit der vom Fahrzeug weg in Richtung Hauptquerträger zeigenden Öffnung eine gezielte Entfaltung ermöglichen. Natürlich kann der Hilfsquerträger auch eine andere Querschnittsgestaltung aufweisen, wobei die Öffnung beispielsweise nur teilweise ausgebildet sein kann, insbesondere dort, wo der Gassack expandieren und entfalten soll. Entscheidend ist allein die schnelle Verlagerung des Hauptquerträgers, was durch die gerichtete Entfaltung infolge der Querschnittsgestaltung des Hilfsquerträgers in der unmittelbaren Umgebung des Aktors begünstigt wird.

Weiterhin bevorzugt weist das ausfahrbare Segment des Deformationselementes eine Länge auf, welche die Länge des ortsfesten Segments übersteigt. Bevorzugt ist das Verhältnis der Länge des ausfahrbaren Segments zur Länge des ortsfesten Segments von 1,2 zu 1 bis 3 zu 1, besonders bevorzugt von 1,3 zu 1 bis 2 zu 1.

Das ortsfeste Segment des Deformationselements dient dabei im Wesentlichen der Führung des ausfahrbaren Segments sowie zur Befestigung direkt oder über Flanschplatten am Längsträger der Fahrzeugkarosse, und ist wenn überhaupt nur zu einem sehr späten Zeitpunkt im Aufprallgeschehen am der Energieaufnahme beteiligt. Bei einem Fahrzeugaufprall mit geringer Geschwindigkeit bis 16 Kilometer pro Stunde hingegen erfolgt im ortsfesten Segment keine Energieaufnahme und somit auch keine Deformation, so dass dieses auch nicht repariert bzw. ausgetauscht werden muss. Dazu kann das ortsfeste Segment eine gegenüber dem bewegbaren Segment größere Wandquerschnittsfläche aufweisen, welche allein durch einen größeren Umfang, bevorzugt aber auch durch eine geringfügig größere Wandstärke ausgebildet ist. Das Verhältnis der Wandstärken des verlagerbaren Segments zum ortsfesten Segment beträgt in diesem Fall bevorzugt 1,6 zu 2 bis 0,9 zu 2.

Es ist aber im Rahmen der Erfindung auch möglich, dass ortsfeste Segment des Deformationselements mit einer gegenüber dem ausfahrbaren Segment geringeren Wandstärke zu versehen, insbesondere dann, wenn dieses formschlüssig im Wesentlichen innerhalb des Längsträgers der Fahrzeugkarosse angeordnet ist. Das Verhältnis der Wandstärken von verlagerbaren Segment zu ortsfestem Segment beträgt in diesem Fall bevorzugt 1,5 zu 1 bis 2,5 zu 1.

Als Material für die Querträger und der Deformationselemente sind verschiedene Konfigurationen möglich. Um dem Leichtbaugedanken auch diesbezüglich Rechnung zu tragen, kann vorgesehen sein, sowohl die Querträger als auch die Deformationselemente aus Aluminium oder einem anderen Leichtmetall auszuführen. Es ist zudem möglich, dass anstelle eines Metalls besonders für einen der Querträger auch ein faserverstärkter Kunststoff zum Einsatz kommt, welcher beispielsweise durch Verrippungen oder eine Sandwichstruktur bezüglich Biegesteifigkeit und/oder Torsionssteifigkeit optimiert werden kann. Ebenso ist eine Mischbauweise aus Metall und Kunststoff vorstellbar. Bei einer Kombination eines Hauptquerträgers aus Stahl und eines Hilfsquerträgers und/oder Deformationselementen aus Aluminium bieten sich aus Korrosionsschutzgründen besonders verzinkte Stahlbleche an.

Es folgt die weitere detaillierte Beschreibung der Erfindung anhand von schematisch und vereinfacht dargestellten Figuren. Für gleichartige oder funktional ähnliche Bauteile werden soweit sinnvoll die gleichen Bezugszeichen verwendet.
- Figur 1a bis 1c:: eine erste Ausführungsform der erfindungsgemäßen Stoßfängeranordnung;
- Figur 2:: eine zweite Ausführungsform der erfindungsgemäßen Stoßfängeranordnung;
- Figur 3a bis 3b:: eine dritte Ausführungsform der erfindungsgemäßen Stoßfängeranordnung;
- Figur 4:: eine vierte Ausführungsform der erfindungsgemäßen Stoßfängeranordnung und
- Figur 5:: eine fünfte Ausführungsform der erfindungsgemäßen Stoßfängeranordnung.

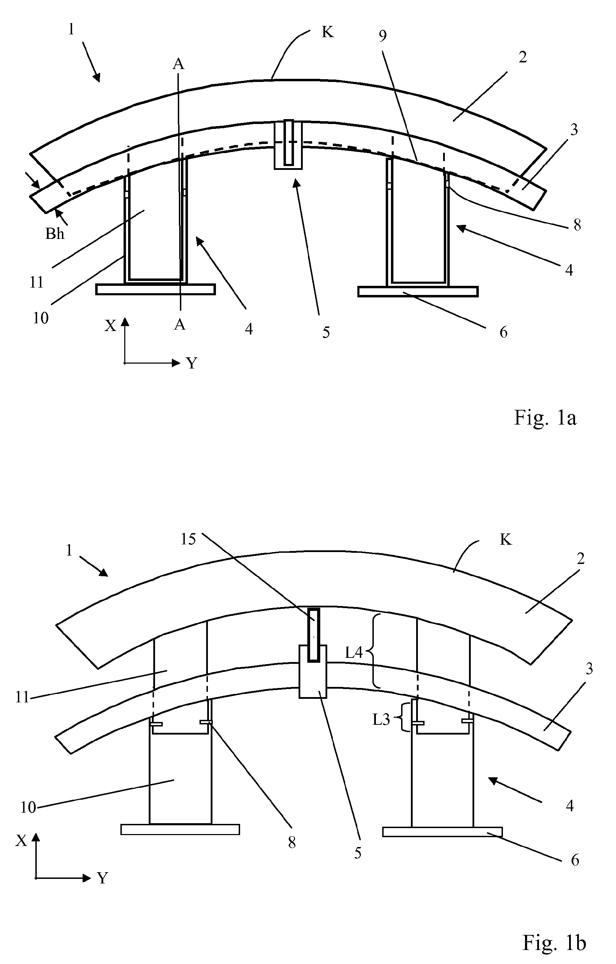

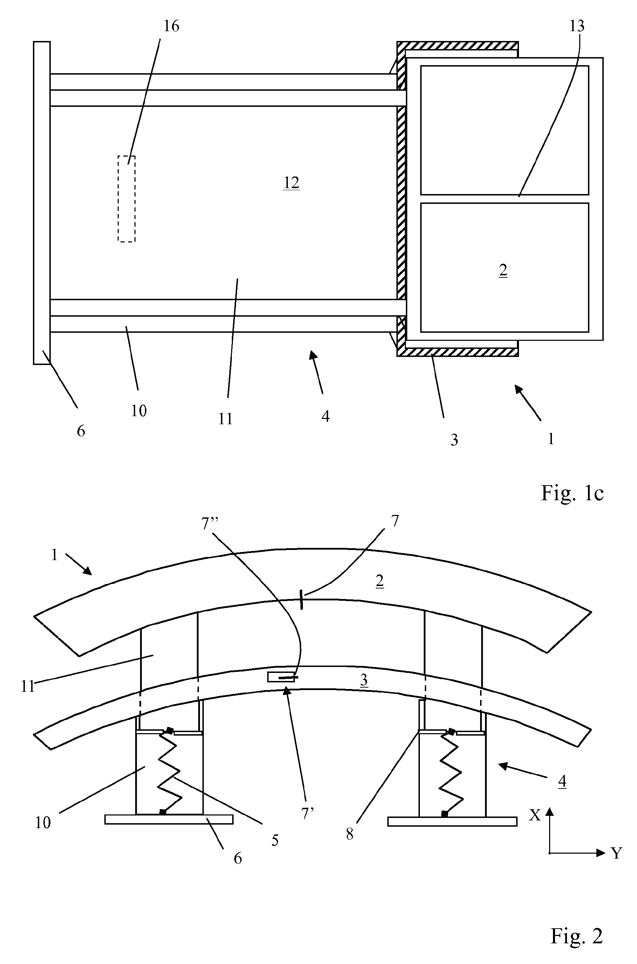

In Figur 1a ist eine erste Ausführungsform des erfindungsgemäßen Stoßfängersystems 1 in einer Ausgangsposition dargestellt. Dieses umfasst einen von einem in Fahrtrichtung X nach vorn weisenden Hauptquerträger 2, einen in Fahrtrichtung X dahinter liegenden Hilfsquerträger 3 sowie zwei Deformationselemente 4, welche an der Fahrzeugkarosse 6 angebunden sind. Der Hilfsquerträger 3 ist in Fahrzeugquerrichtung Y torsionssteif ausgeführt, und versteift so die Fahrzeugkarosse, insbesondere bei dynamischer oder außermittiger statischer Belastung der vorderen Fahrzeugkarosse 6. Die Fahrzeugkarosse 6 ist hier nur ansatzweise in Form eines Längsträgersausschnitts dargestellt. Der Hauptquerträger 2 ist mit den Deformationselementen 4 gekoppelt und steht mit einem Aktor 5 in Wirkverbindung, welcher am Hilfsquerträger 3 abstützt ist. Der Hauptquerträger 2 befindet sich in der Ausgangsposition abschnittsweise innerhalb des in Fahrtrichtung X offenen, im Querschnitt C-förmig konfigurierten Hilfsquerträgers 3, so dass die wirksame Breite Bh des Hilfsquerträgers 3 im Hinblick auf den erforderlichen Bauraum kaum ins Gewicht fällt. Dies wird in Figur 1c nochmals deutlicher dargestellt. Das Deformationselement 4 weist ein erstes ortsfest zur Fahrzeugkarosse 6 positioniertes und mit dieser gekoppeltes Segment 10 auf. Bereichsweise innerhalb des ortsfesten Segments 10 des Deformationselementes 4 befindet sich ein verlagerbares zweites Segment 11, welches durch eine Öffnung 9 (Figur 1 a) im Hilfsquerträger 3 hindurchragt und am Hauptquerträger 2 befestigt ist. Sowohl der Hauptquerträger 2 als auch der Hilfsquerträger 3 weisen eine im Wesentlichen gleichartige Krümmung K auf, die der Kontur der Fahrzeugfront angepasst ist.

In Figur 1b befindet sich das Stoßfängersystem 1 aus Figur 1 a in der Endposition, welche sich dadurch auszeichnet, dass der Zylinder 15 des Aktors 5 vollständig ausgefahren ist und damit die verlagerbaren Segmente 11 des Deformationselement 4 in die Endposition überführt sind. Eine Restlänge L3 des verlagerbaren Segmentes 11 verbleibt auch in der Endposition der Stoßfängeranordnung innerhalb des ortsfesten Segmentes 10, so dass eine ausreichende Führung und radiale sowie axiale Belastbarkeit auch bei einem Offsetaufprall auf ein Hindernis mit geringer vertikaler oder horizontaler Überdeckung gegeben ist, ohne dass das verlagerbare Segment 11 abzubrechen oder auszureißen droht. Die Restlänge L3 liegt je nach Ausfahrweg L4, Querschnittsfläche und Wandstärke der Segmente 10, 11 des Deformationselementes 4 zwischen 30mm und 80mm.

Durch ein Rastelement 8 auf zwei Seiten innerhalb des Deformationselementes 4, wird sowohl die Bewegung des Hauptquerträgers 2 in die Endposition hinein beendet als auch die eigentliche Kraftübertragung beim Aufprall auf ein Hindernis sichergestellt. In dieser Ausführungsform wird das durch eine formschlüssige Verbindung zwischen dem am ortsfesten Segment 10 angebrachten Rastelement 8 und einer Rastöffnung 16 (Figur 1c) oder Nut des verlagerbaren Segmentes 11 des Deformationselements 4 erreicht. Natürlich kann auch vorgesehen werden, dass Rastelement 8 auf einer Oberseite und der Unterseite oder allseitig des Deformationselementes 4 anzuordnen.

Der Ausfahrweg L4, um welcher der Hauptquerträger verlagert wird, entspricht in etwa der Länge eines Deformationselementes bei einem vergleichbaren Kraftfahrzeug nach dem Stand der Technik, und kann zwischen 30mm und 100mm betragen.

Figur 1c zeigt eine in Figur 1a angedeutete Schnittansicht A-A im Bereich der Deformationselemente 4. Zu erkennen ist insbesondere, dass der Hilfsquerträger 3 den Hauptquerträger 2 bereichsweise umgreift und C-förmig konfiguriert ist. Der Hauptquerträger 2 ist hier als Doppelhohlprofil ausgebildet und weist eine Zwischenwand 13 auf.

Weiterhin ist eine Rastöffnung 16 einer Seitenwand 12 des verlagerbaren Segments 11 des Deformationselementes 4 zu erkennen, in welche ein nicht dargestelltes Rastelement 8 am ortsfesten Segment 10 des Deformationselementes 4 eingreifen kann.

In Figur 2 ist eine alternative Ausführungsform des erfindungsgemäßen Stoßfängersystems 1 dargestellt. Hier erfolgt die Verlagerung des Hauptquerträgers über zwei in den Deformationselementen angeordnete Aktoren 5, welche als Druckfedern ausgeführt sind und sich zwischen Fahrzeugkarosse 6 und verlagerbarem Segment 11 des Deformationselements 4 erstrecken. Der Aktor ist bevorzugt an einer nicht dargestellten Flanschplatte der Fahrzeugkarosse 6 am vorderen Ende des Längsträgers befestigt oder am vom Hauptquerträger 2 weg weisenden Ende des ortsfesten Segments 10 des Deformationselements 4.

In seiner Endposition wird der Hauptquerträger 2 durch Verriegelungselemente 7 festgelegt, welche in dieser Ausführung als Schieber in Fahrtrichtung X direkt hinter den verlagerbaren Segmenten 11 angeordnet sind und so eine Rückbewegung blockieren. Somit ist eine Kraftweiterleitung in die Fahrzeugkarosse 6 bei einem Aufprall mit hoher Geschwindigkeit sichergestellt. Des Weiteren ist im Zentrum des Hilfsquerträgers 3 eine Verriegelung zu erkennen, welches die Ausfahrbewegung des Hauptquerträgers 2 solange blockiert, wie kein relevanter Fahrzeugaufprall detektiert wird. Die Verriegelung wiederum steht in dieser Ausführungsform mit einem elektromagnetischen oder pyrotechnischen Aktuator 7' in Wirkverbindung, wobei der Aktuator 7' einen Bolzen 7" aufweist und diesen linear antreibt, wodurch die Verriegelung freigegeben und die Ausfahrbewegung ausgelöst wird. Die Verriegelung ist hier als den Bolzen 7" teilweise umgreifendes Verriegelungselement 7 ähnlich der Kopfform eines Maulschlüssels ausgeführt, wobei durch einen Bolzenrückzug die Freigabe erfolgt.

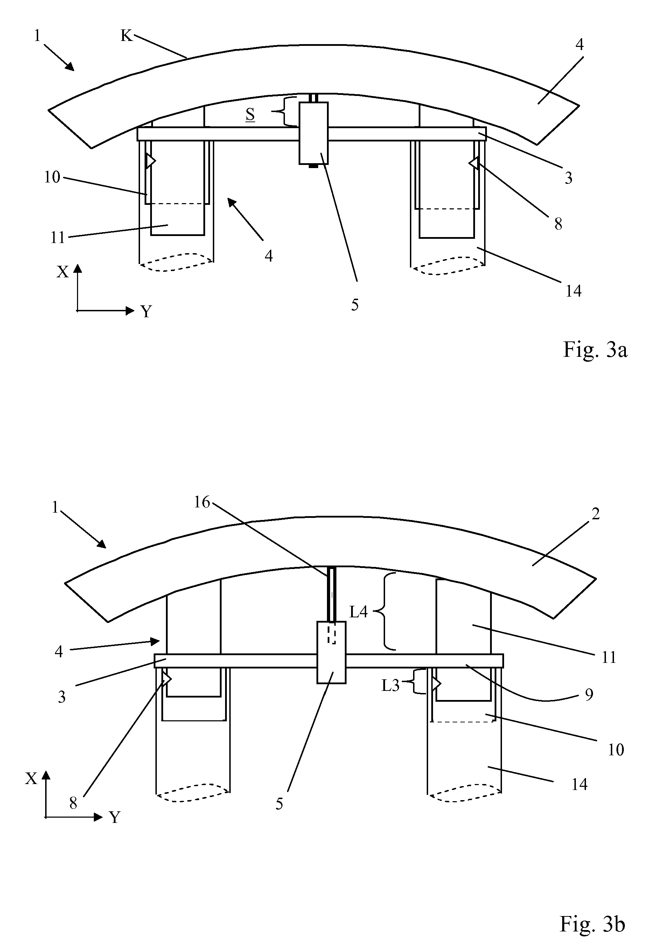

In Figur 3a ist eine weitere Ausführungsform des erfindungsgemäßen Stoßfängersystems 1 in einer Ausgangsposition dargestellt, welche sich dadurch auszeichnet, dass der Überhang durch die nahezu vollständige Anordnung des Deformationselement 4 in die Längsträger 14 der Fahrzeugkarosse 6 hinein in der Ausgangsposition minimiert ist. Das ortsfest zur Fahrzeugkarosse 6 positionierte Segment 10 des Deformationselementes 4 befindet sich innerhalb des Längsträgers 14 und schließt im Wesentlichen bündig mit dem Ende des Längsträgers 14 in Richtung Hauptquerträger 2 ab. Wichtig dabei ist, dass ein Abstand zwischen Innenmaß des Längsträgers 14 und Außenmaß dieses Segmentes 10 des Deformationselementes 4 besteht, um das Faltverhalten des Längsträgers 14 bei einem harten Hochgeschwindigkeitsaufprall nicht negativ zu beeinflussen. Das wird dadurch erreicht, dass die Kopplung des ortsfesten Segmentes 10 direkt am Hilfsquerträger 3 erfolgt, welcher wiederum mit den Enden der Längsträger 14 gekoppelt ist.

Innerhalb des ortsfesten Segments 10 des Deformationselementes 4 verläuft wiederum das verlagerbare Segment 11. Dabei ist zu beachten, dass das verlagerbare Segment 11 des Deformationselementes 4 in der Ausgangsposition nur in dem Maße aus dem Längsträger 14 herausragt, wie die Krümmung und die Befestigungssituation am Hauptquerträger 2 es verlangen. Am Hilfsquerträger 3, der sich zwischen den Längsträgern 14 geradlinig erstreckt, ist mittig ein Aktor 5 festgelegt, welcher mit dem Hauptquerträger 2 in Wirkverbindung steht. Aufgrund der Krümmung K des Hauptquerträgers 2 besteht auch in der Ausgangsposition ein Spalt S zwischen den beiden Querträgern 2, 3, welcher optional mit weichen Deformationsmitteln, beispielsweise mittels Schaum oder einem anderen expandierenden Medium ausfüllbar ist.

Der Aktor 5 ist in dieser Ausführungsform als Linearantrieb ausgebildet, beispielsweise als Druckzylinder. Prinzipiell sind aber beliebige Stellantriebe und auch pyrotechnische Aktoren in Kombination mit einer aufblasbaren oder auffaltbaren Mechanik vorstellbar.

Zudem übernimmt der Aktor 5 in dieser Ausführungsform gleichzeitig die Aufgabe einer Verriegelung im Ausgangszustand, so dass auf separate Bauteile verzichtet werden kann.

Es ist aber selbstverständlich auch möglich, innerhalb des Deformationselementes 4 eine Verriegelung vorzusehen, welche durch Zustandsänderung von einer Verriegelungsstellung in eine Entriegelungsstellung überführbar ist und die Bewegung des Hauptquerträgers in Richtung Aufprallobjekt freigibt. Damit kann der Aktor 5 weniger komplex gestaltet werden, beispielsweise als einfache Druckspiralfeder.

In Figur 3b ist befindet sich das Stoßfängersystem 2 aus Figur 3a in der Endposition, welche sich dadurch auszeichnet, dass der Zylinder 15 des Aktors 5 vollständig ausgefahren und dabei die verlagerbaren Segmente des Deformationselement in die Endposition überführt hat. Eine Restlänge L3 des verlagerbaren Segmentes 11 verbleibt auch in Endposition der Stoßfängeranordnung 1 innerhalb des ortsfesten Segmentes 10, so dass eine ausreichende Führung und Belastbarkeit auch bei einem Offsetaufprall auf ein Hindernis mit geringer vertikaler oder horizontaler Überdeckung gegeben ist, ohne dass das verlagerbare Segment 11 abzubrechen oder auszureißen droht.

Durch ein Rastelement 8 innerhalb des Deformationselementes 4, wird sowohl die Bewegung des Hauptquerträgers in die Endposition hinein beendet als auch die eigentliche Kraftübertragung beim Aufprall auf ein Hindernis sichergestellt. In dieser Ausführungsform wird das durch eine formschlüssige Verbindung zwischen dem am ortsfesten Segment 10 angebrachten Rastelement 8 und einer Rastöffnung 16 oder Rastnut des verlagerbaren Segmentes 11 des Deformationselements 4 erreicht.

Der Ausfahrweg L4, um welcher der Hauptquerträger 2 verlagert wird, entspricht in etwa der Länge eines Deformationselementes für die Fahrzeugfront bei einem vergleichbaren Kraftfahrzeug nach dem Stand der Technik, und kann zwischen 30mm und 100mm betragen.

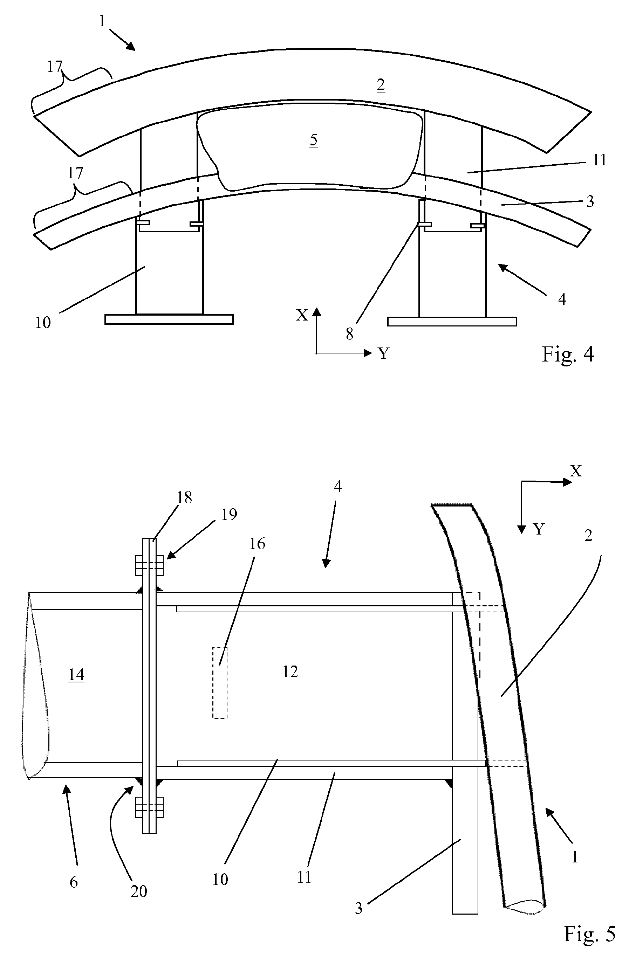

In Figur 4 schließlich ist eine besonders bevorzugte Ausführungsform dargestellt, wobei ein zentraler Aktor 5 die Verlagerung des Hauptquerträges 2 in die Endposition bewirkt, welcher in Form eines auffaltbaren Gassacks ausgebildet ist. Dieser wird vom in Richtung Hauptquerträger 2 offenen Hilfsquerträger 3 nach oben und unten begrenzend umfasst und verläuft im aufgefalteten Zustand im Wesentlichen zwischen den beiden Deformationselementen 4 und den Querträgern 2, 3. Der Auslösungsmechanismus selbst ist nicht dargestellt und erfolgt bevorzugt pyrotechnisch aufgrund eines vom Steuergerät weitergeleiteten Crashdetektionssignals.

Beide Querträger 2, 3 besitzen über die Deformationselemente hinausgehende Endbereiche E, welche im Wesentlichen zu einer verbesserten Abgleitung bei einem Frontalaufprall mit geringer Überdeckung beitragen und ein Verkeilen der Räder unterbinden. Dieser Effekt wird durch die Überlappung beider Querträger 2, 3 in diesem sensiblen Bereich unterstützt, insbesondere weil die Querträger 2, 3 einander korrespondierende Geometrien in den Endabschnitten 17 aufweisen.

In Figur 5 ist eine weitere Ausführungsvariante dargestellt, welche sich besonders durch die Anbindung des Deformationselementes an die Fahrzeugkarosse 6 von den bisherigen Ausführungen unterscheidet. Stellvertretend für die Karosse ist ein Längsträger 14 Ausschnittsweise abgebildet, welcher stoffschlüssig über eine Schweißverbindung 20 mit einer ersten, fahrzeugzugewandten Flanschplatte 18 verbunden ist. Das ortsfeste Segment 11 des Deformationselements 4 ist ebenso stoffschlüssig mit einer fahrzeugabgewandten Flanschplatte verbunden, welche wiederum über Schraubverbindungen 19 mit der ersten Flanschplatte 18 gefügt ist. Es ergibt sich dadurch eine spielfreie und steife Verbindung zwischen Deformationselement 4 und Fahrzeugkarosse 6.

Am vorderen in Fahrtrichtung (X) gerichteten Ende des ortsfesten Segments 10 ist der Hilfsquerträger 3 festgelegt, wobei dieser sich in dieser Ausführungsform im Wesentlichen über die gesamte Querschnittsfläche des ortsfesten Segments 11 erstreckt und umfangseitig durchgehend oder mittels einer Steppnaht verschweißt ist. Das verlagerbare Segment 10 verläuft innerhalb des ortsfesten Segments 11, wobei daran der Hauptquerträger 2 festgelegt ist.

Nicht dargestellt sind Aktor, Verriegelungselemente oder Rastelemente, welche aus den zuvor beschriebenen Ausführungsformen beliebig mit der Art der Anbindung nach Figur 5 kombiniert werden können.

### Bezugszeichen:

- 1 -: Stoßfängeranordnung
- 2 -: Hauptquerträger
- 3 -: Hilfsquerträger
- 4 -: Deformationselement
- 5 -: Aktor
- 6 -: Fahrzeugkarosse
- 7 -: Verriegelungselement
- 7' -: Aktuator
- 7" -: Bolzen zu 7'
- 8 -: Rastelement
- 9 -: Öffnung
- 10 -: ortsfestes Segment von 4
- 11 -: verlagerbares Segment von 4
- 12 -: Seitenwand von 11
- 13 -: Zwischenwand von 2
- 14 -: Längsträger
- 15 -: Zylinder
- 16 -: Rastöffnung
- 17 -: Endabschnitt von 2, 3
- 18 -: Flanschplatte
- 19 -: Schraubverbindung
- 20 -: Schweißverbindung

- Bh -: Breite
- L1 -: Länge von 10
- L2 -: Länge von 11
- L3 -: Restlänge von 11 in 10 in Endposition
- L4 -: Ausfahrweg
- K -: Krümmung
- S -: Spalt
- X -: Fahrrichtung
- Y -: Fahrzeugquerrichtung

## Patentansprüche

1. Stoßfängeranordnung für ein Kraftfahrzeug, umfassend einen in Fahrtrichtung (X) verlagerbaren Hauptquerträger (2), welcher sich wenigstens abschnittsweise zwischen zwei Deformationselementen (4) erstreckt, wobei die Deformationselemente (4) jeweils ein verlagerbares Segment (11) und ein ortsfestes Segment (10), welche relativ zueinander bewegbar sind, umfassen, wobei das verlagerbare Segment (11) mit dem Hauptquerträger (2) gekoppelt ist und das ortsfeste Segment (10) entweder direkt mit der Fahrzeugkarosse (6) oder über eine Flanschplatte (18) mit der Fahrzeugkarosse (6) koppelbar ist, **dadurch gekennzeichnet, dass** benachbart zum Hauptquerträger (2) ein ortsfester Hilfsquerträger (3) angeordnet ist und sich zwischen den Deformationselementen (4) erstreckt, wobei der Hilfsquerträger (3) mit dem ortsfesten Segment (10) des Deformationselementes (4) stoffschlüssig gekoppelt ist oder über Flanschplatten (18) an der Fahrzeugkarosse (6) koppelbar ist, wobei an dem Hilfsquerträger (3) ein bewegbares Verriegelungselement (7) befestigt ist, welches den Hauptquerträger (2) in einer Ausgangsposition und/oder Endposition hält.

2. Stoßfängeranordnung nach dem vorherigen Anspruch, **dadurch gekennzeichnet, dass** das ortsfeste Segment (10) des Deformationselementes (4) an einem Längsträger (14) über Flanschplatten (18) und/oder wenigstens teilweise innerhalb eines Längsträgers (14) der Fahrzeugkarosse (6) festlegbar ist.

3. Stoßfängeranordnung nach einem der vorherigen Ansprüche, **dadurch gekennzeichnet, dass** der Hilfsquerträger (3) mit dem ortsfest zur Fahrzeugkarosse (6) positionierten Segment (10) des Deformationselements (4) fest verbunden ist, insbesondere stoffschlüssig.

4. Stoßfängeranordnung nach einem der vorherigen Ansprüche, **dadurch gekennzeichnet, dass** ein Verriegelungselement (7) vorgesehen ist, welches den Hauptquerträger (2) und/oder das verlagerbare Segment (11) des Deformationselementes (4) in einer Ausgangsposition hält und/oder in der Endposition festlegt.

5. Stoßfängeranordnung nach einem der vorherigen Ansprüche, **dadurch gekennzeichnet, dass** ein Aktor (5) innerhalb des Deformationselementes (4) angeordnet ist, welcher die Verlagerung der Segmente (10, 11) zueinander bewirkt.

6. Stoßfängeranordnung nach Anspruch 5, **dadurch gekennzeichnet, dass** der Aktor (5) ein Energiespeicher ist, insbesondere ein pyrotechnischer Aktor (5) oder ein mechanischer, hydraulischer oder pneumatischer Druckspeicher.

7. Stoßfängeranordnung nach einem der vorherigen Ansprüche, **dadurch gekennzeichnet, dass** genau ein Aktor (5) am und/oder im Hilfsquerträger (3) angeordnet ist, welcher dafür vorgesehen ist, den Hauptquerträger (2) von seiner Ausgangsposition in seine Endposition zu verlagert.

8. Stoßfängeranordnung nach einem der vorherigen Ansprüche, **dadurch gekennzeichnet, dass** der Aktor (5) faltbar ausgebildet ist und zur Verlagerung des Hauptquerträgers (2) in die Endposition von einem gefalteten in eine entfalteten Zustand überführbar ist.

9. Stoßfängeranordnung nach einem der vorherigen Ansprüche, **dadurch gekennzeichnet, dass** der Aktor (5) mit dem Verriegelungselement (7) derart zusammenwirkt, dass bei Zustandsänderung des Verriegelungselements (7) von einer Verriegelungsstellung in eine Entriegelungsstellung der Hauptquerträger (2) schlagartig in die Endposition verlagerbar ist.

10. Stoßfängeranordnung nach einem der vorherigen Ansprüche, **dadurch gekennzeichnet, dass** der Hilfsquerträger (3) den Hauptquerträger (2) in seiner Längserstreckung wenigstens abschnittsweise umgreift.

11. Stoßfängeranordnung nach einem der vorherigen Ansprüche, **dadurch gekennzeichnet, dass** das ausfahrbare Segment (11) des Deformationselementes (4) eine Länge L1 aufweist, welche die Länge L2 des ortsfesten Deformationselementes (4) übersteigt.

12. Stoßfängeranordnung nach Anspruch 11, **dadurch gekennzeichnet, dass** das Verhältnis L1/L2 von 1,2 zu 1 bis 3 zu 1 beträgt.

13. Stoßfängeranordnung nach Anspruch 11 oder 12, **dadurch gekennzeichnet, dass** das Verhältnis L1/L2 von 1,3 zu 1 bis 2 zu 1 beträgt.

## Claims

1. Bumper arrangement for a motor vehicle, including a principal crossmember (2) displaceable in the direction of travel (X), which extends at least in some sections between two deformation elements (4), wherein the deformation elements (4) include in each case a displaceable segment (11) and a fixed segment (10) that are moveable relative to one another, wherein the displaceable segment (11) is coupled to the principal crossmember (2) and the fixed segment (10) can be coupled either directly to the vehicle body (6) or via a flange plate (18) to the vehicle body (6), **characterised in that** a fixed auxiliary crossmember (3) is arranged adjacent to the principal crossmember (2) and extends between the deformation elements (4), wherein the auxiliary crossmember (3) is coupled in a cohesive manner to the stationary segment (10) of the deformation element (4) or can be coupled via flange plates (18) to the vehicle body (6), wherein a moveable locking element (7) is fixed to the auxiliary crossmember (3), which holds the principal crossmember (2) in an initial position and/or end position.

2. Bumper arrangement according to the preceding claim, **characterised in that** the stationary segment (10) of the deformation element (4) can be fixed to a longitudinal support (14) via flange plates (18) and/or can be fixed at least partially within a longitudinal support (14) of the vehicle body (6).

3. Bumper arrangement according to the preceding claims, **characterised in that** the auxiliary crossmember (3) is firmly connected, in particular in a cohesive manner, to the segment (10) of the deformation element (4) positioned fixed with respect to the vehicle body (6).

4. Bumper arrangement according to the preceding claims, **characterised in that** a locking element (7) is provided, which holds the principal crossmember (2) and/or the displaceable segment (11) of the deformation element (4) in an initial position and/or fixes it in the end position.

5. Bumper arrangement according to the preceding claims, **characterised in that** an actuator (5) is arranged within the deformation element (4), which effects the displacement of the segments (10, 11).

6. Bumper arrangement according to claim 5, **characterised in that** the actuator (5) is an energy store, in particular a pyrotechnic actuator (5) or a mechanical, hydraulic or pneumatic pressure accumulator.

7. Bumper arrangement according to one of the preceding claim, **characterised in that** exactly one actuator (5) is arranged on and/or in the auxiliary crossmember (3), which is provided so that the principal crossmember (2) can be displaced from its initial position to its end position.

8. Bumper arrangement according to the preceding claims, **characterised in that** the actuator (5) is formed collapsible, and in order to displace the principal crossmember (2) to the end position can be converted from a collapsed state to an unfolded state.

9. Bumper arrangement according to the preceding claims, **characterised in that** the actuator (5) cooperates with the locking element (7) in such a way that with a change of state of the locking element (7) from a locking position to a release position the principal crossmember (2) can be displaced instantly to the end position.

10. Bumper arrangement according to the preceding claims, **characterised in that** the auxiliary crossmember (3) encloses at least in some sections the principal crossmember (2) in its longitudinal extension.

11. Bumper arrangement according to the preceding claims, **characterised in that** the extensible segment (11) of the deformation element (4) has a length L1, which exceeds the length L2 of the fixed deformation element (4).

12. Bumper arrangement according to the preceding claim, **characterised in that** the ratio L1/L2 is from 1.2 to 1 to 3 to 1.

13. Bumper arrangement according to claim 11 or 12, **characterised in that** the ratio L1/L2 is from 1.3 to 1 to 2 to 1.

## Revendications

1. Dispositif pare-chocs pour un véhicule automobile, comprenant une traverse principale (2) qui peut se déplacer dans le sens de la marche (X) et qui s'étend au moins par endroits entre deux éléments de déformation (4), les éléments de déformation (4) comprenant chacun un segment déplaçable (11) et un segment fixe (10), lesquels sont mobiles l'un par rapport à l'autre, le segment déplaçable (11) étant couplé à la traverse principale (2) et le segment fixe (10) pouvant être soit couplé directement à la carrosserie de véhicule (6) soit couplé par l'intermédiaire d'une plaque à rebord (18) à la carrosserie de véhicule (6), **caractérisé en ce qu'**une traverse auxiliaire fixe (3) est agencée au voisinage de la traverse principale (2) et s'étend entre les éléments de déformation (4), la traverse auxiliaire (3) est couplée par liaison de matière au segment fixe (10) de l'élément de déformation (4) ou peut être couplée par l'intermédiaire de plaques à rebord (18) à la carrosserie de véhicule (6), un élément de verrouillage mobile (7) qui maintient la traverse principale (2) dans une position de départ et/ou dans une position finale étant fixé à la traverse auxiliaire (3).

2. Dispositif pare-chocs selon la revendication précédente, **caractérisé en ce que** le segment fixe (10) de l'élément de déformation (4) peut être fixé à un longeron (14) par l'intermédiaire de plaques à rebord (18) et/ou au moins partiellement à l'intérieur d'un longeron (14) de la carrosserie de véhicule (6).

3. Dispositif pare-chocs selon l'une des revendications précédentes, **caractérisé en ce que** la traverse auxiliaire (3) est assemblée de manière fixe, notamment par liaison de matière, avec le segment (10), positionné fixe par rapport à la carrosserie de véhicule (6), de l'élément de déformation (4).

4. Dispositif pare-chocs selon l'une des revendications précédentes, **caractérisé en ce qu'**il est prévu un élément de verrouillage (7) qui maintient dans une position de départ la traverse principale (2) et/ou le segment déplaçable (11) de l'élément de déformation (4) et/ou les fixe dans une position finale.

5. Dispositif pare-chocs selon l'une des revendications précédentes, **caractérisé en ce qu'**un actionneur (5) qui provoque le déplacement des segments (10, 11) l'un par rapport à l'autre est agencé à l'intérieur de l'élément de déformation (4).

6. Dispositif pare-chocs selon l'une des revendications précédentes, **caractérisé en ce que** l'actionneur (5) est un accumulateur d'énergie, notamment un actionneur pyrotechnique (5), ou un accumulateur de pression mécanique, hydraulique ou pneumatique.

7. Dispositif pare-chocs selon l'une des revendications précédentes, **caractérisé en ce qu'**il est prévu, sur et/ou dans la traverse auxiliaire (3), exactement un actionneur (5) qui est destiné à déplacer la traverse principale (2) de sa position de départ à sa position finale.

8. Dispositif pare-chocs selon l'une des revendications précédentes, **caractérisé en ce que** l'actionneur (5) est conçu pliable et, pour le déplacement de la traverse principale (2) dans la position finale, on peut le faire passer d'un état plié à un état déplié.

9. Dispositif pare-chocs selon l'une des revendications précédentes, **caractérisé en ce que** l'actionneur (5) coopère de telle sorte avec l'élément de verrouillage (7) que, lors d'un changement d'état de l'élément de verrouillage (7) d'une position de verrouillage à une position de déverrouillage, la traverse principale (2) peut être déplacée brusquement dans la position finale.

10. Dispositif pare-chocs selon l'une des revendications précédentes, **caractérisé en ce que** la traverse auxiliaire (3) enveloppe la traverse principale (2) au moins par endroits dans son extension longitudinale.

11. Dispositif pare-chocs selon l'une des revendications précédentes, **caractérisé en ce que** le segment sortable (11) de l'élément de déformation (4) a une longueur L1 qui dépasse la longueur L2 de l'élément de déformation (4) fixe.

12. Dispositif pare-chocs selon la revendication 11, **caractérisé en ce que** le rapport L1/L2 est compris entre 1,2 à 1 et 3 à 1.

13. Dispositif pare-chocs selon la revendication 11 ou 12, **caractérisé en ce que** le rapport L1/L2 est compris entre 1,3 à 1 et 2 à 1.
